# EUROPEAN PATENT APPLICATION

(11) **EP 4 040 159 A1**
(43) Date of publication of application: **10.08.2022**
(21) Application number: 20872485.6
(22) Date of filing: 24.09.2020
(51) Int. Cl.: G01N 35/00, G01N 35/02

(54) **REAGENT MANAGEMENT METHOD**

(30) Priority: 30.09.2019 JP 2019180787
(71) Applicant: Sekisui Medical Co., Ltd., Tokyo 103-0027 (JP)
(72) Inventor: KAWABE, Toshiki, Tokyo 103-0027 (JP); OGASAWARA, Kosuke, Tokyo 103-0027 (JP); IIJIMA, Yumi, Tokyo 103-0027 (JP)
(74) Representative: Schäfer, Matthias W.
(86) International application number: PCT/JP2020/035944
(87) International publication number: WO 2021/065652

(57) **Abstract**

Provided are an automatic analysis apparatus capable of sharing a reagent between a plurality of independent apparatuses and a method for sharing a reagent between apparatuses.

Independent automatic analysis apparatuses 1A and 1B of the invention include controllers 82A and 82B for controlling an operation of each unit of the apparatus, reagent-related information input/output units 81A and 81B for inputting and outputting reagent-related information I related to a reagent installed in a reagent supply portion including a reagent in use, reagent vessel detection units 83A and 83B for detecting that a reagent vessel is taken in and/or taken out of the automatic analysis apparatus, and reagent-related information reading units 84A and 84B for reading reagent-related information C from the reagent and/or reagent vessel in use detected to be taken in by the reagent vessel detection unit. The controllers 82A and 82B compare the reagent-related information C read by the reagent-related information reading unit 84A and 84B with the reagent-related information I input to the reagent-related information input/output units 81A and 81B, and control an operation of the reagent supply portion based on a comparison result thereof.

## Description

### TECHNICAL FIELD

The present invention relates to an automatic analysis apparatus capable of obtaining measurement information on various test items by causing a reaction between a sample (specimen) such as blood or urine and various reagents to measure a reaction process thereof, and a method for sharing a reagent between automatic analysis apparatuses.

### BACKGROUND ART

Conventionally, there have been various types of known automatic analysis apparatuses (hereinafter, may be abbreviated as an apparatus) that can obtain measurement information on various test items by causing a reaction between various reagents and biological samples such as blood and urine to measure a reaction process thereof, such as a blood coagulation analysis apparatus and an analysis apparatus using an immunoassay method. For example, a specimen as a biological sample is dispensed from a specimen vessel to a reaction vessel, and a reagent according to a test item is dispensed and mixed with the dispensed specimen to perform various measurements and analyzes (for example, see Patent Document 1).

### CITATION LIST

### PATENT DOCUMENT

Patent Document 1: JP 2019-135497 A

### SUMMARY OF THE INVENTION

### PROBLEM TO BE SOLVED BY THE INVENTION

Such an automatic analysis apparatus uses a serial number displayed on a label attached to a reagent vessel to perform various managements (management of usage state, for example, accuracy management, etc.) on a reagent for each reagent vessel containing the reagent. For example, in management of the number of remaining tests for the reagent, the apparatus can detect a reagent usage status for each reagent vessel using a serial number, and thus in the same automatic analysis apparatus, it is common that a used reagent vessel having the same serial number cannot be reused. This description is applied not only to management of the number of remaining tests but also to management of the remaining amount of reagent. Therefore, a remaining reagent in a reagent vessel used once in one automatic analysis apparatus cannot be continuously used again in the apparatus.

On the other hand, in the case of sharing the same reagent vessel between two independent apparatuses, when the reagent vessel in use is transferred from a first apparatus starting to use a reagent to a second apparatus, the second apparatus recognizes the transferred reagent vessel as an unused vessel (since the reagent vessel is a reagent vessel of a serial number used for the first time in the second apparatus) and checks a liquid volume of the reagent. However, naturally, the liquid volume in the reagent vessel is smaller than that in the unused reagent vessel, and thus the reagent vessel is determined to be insufficient in the liquid volume by the second apparatus and cannot be used. Such a situation is significantly inconvenient for a user who uses at least two identical apparatuses properly. A reason is that when one apparatus becomes unusable due to a failure, etc., the reagent installed in the apparatus cannot be transferred to the other apparatus and used. In addition, it is not easy to use even when one reagent is reused in a plurality of apparatuses such as an apparatus for POCT.

The invention has been made by paying attention to the above-mentioned problems, and an object of the invention is to provide an automatic analysis apparatus capable of sharing a reagent between a plurality of independent apparatuses and a method for sharing a reagent between apparatuses.

### MEANS FOR SOLVING PROBLEM

To achieve the object, the invention is an automatic analysis apparatus including a reaction portion for holding a reaction vessel, a specimen being dispensed into the reaction vessel, and a reagent supply portion for supplying a reagent, the automatic analysis apparatus obtaining measurement information related to a predetermined test item by causing a reaction between a specimen and a reagent supplied from the reagent supply portion to measure a reaction process thereof, the automatic analysis apparatus further including a controller for controlling an operation of each unit of the apparatus, a reagent-related information input/output unit for inputting and outputting reagent-related information related to the reagent installed in the reagent supply portion including a reagent in use, a reagent vessel detection unit for detecting that a reagent vessel containing the reagent in use is taken in and/or taken out of the automatic analysis apparatus, and a reagent-related information reading unit for reading the reagent-related information from the reagent vessel and/or the reagent in use detected to be taken in the automatic analysis apparatus by the reagent vessel detection unit, in which the controller compares the reagent-related information read by the reagent-related information reading unit with the reagent-related information input to the reagent-related information input/output unit, and controls an operation of the reagent supply portion based on a comparison result thereof.

In addition, the invention is a method for sharing a reagent between automatic analysis apparatuses, each of the automatic analysis apparatuses including a reaction portion for holding a reaction vessel, a specimen being dispensed into the reaction vessel, and a reagent supply portion for supplying a reagent, the automatic analysis apparatus obtaining measurement information related to a predetermined test item by causing a reaction between a specimen and a reagent supplied from the reagent supply portion to measure a reaction process thereof, the method including a reagent-related information output step of outputting, from a first automatic analysis apparatus, reagent-related information related to a reagent in use used in the apparatus at a predetermined timing, a reagent-related information input step of inputting the reagent-related information output from the first automatic analysis apparatus to a second automatic analysis apparatus, a reagent vessel detection step of detecting that a reagent vessel containing the reagent in use is taken in the second automatic analysis apparatus, a reagent-related information reading step of reading the reagent-related information from the reagent and/or reagent vessel in use detected to be taken in the second automatic analysis apparatus by the reagent vessel detection step, and a control step of comparing the reagent-related information read in the reagent-related information reading step with the reagent-related information input in the reagent-related information input step, and controlling an operation of the reagent supply portion of the second automatic analysis apparatus based on a comparison result thereof.

According to the automatic analysis apparatus and the method for sharing a reagent between automatic analysis apparatuses having the above configurations, the second automatic analysis apparatus can acquire the reagent-related information related to the reagent started to be used in the first automatic analysis apparatus in two steps from the first automatic analysis apparatus side and from reading by the apparatus on the second automatic analysis apparatus side, compares the reagent-related information acquired in each of the steps, and controls the operation of the reagent supply portion on the second automatic analysis apparatus side based on the comparison result thereof (for example, the operation of the reagent supply portion is controlled so that continuous use of the reagent is allowed when the reagent-related information read by the reagent-related information reading unit matches the reagent-related information input to the reagent-related information input/output unit). Thus, it is possible to share the reagent between the first automatic analysis apparatus and the second automatic analysis apparatus without any problem (the reagent used in the first automatic analysis apparatus can be continuously used in the second automatic analysis apparatus without any problem). For this reason, even when there is no function of allowing reagent information to be exchanged among a plurality of apparatuses by centralized management as in a large-scale testing center, the reagent can be shaped between the two independent apparatuses. As a result, when at least two of the same apparatuses are used properly, it is unnecessary to set the reagents of the same test item in the respective apparatuses, and the waste of the reagents due to limitation of an onboard time can be reduced. In addition, usability of a POCT apparatus, which is likely to share one reagent bottle among a plurality of apparatuses, is improved. This is particularly useful in a reagent serial management method in which usage states of reagent vessels are managed for each reagent vessel by using serial numbers for distinguishing reagents in the same lot.

### EFFECT OF THE INVENTION

According to the invention, it is possible to provide an automatic analysis apparatus capable of sharing a reagent between a plurality of independent apparatuses and a method for sharing a reagent between apparatuses.

### BRIEF DESCRIPTION OF DRAWINGS

Fig. 1 is a schematic overall external view of an automatic analysis apparatus according to an embodiment of the invention;
Fig. 2 is a block diagram illustrating a schematic configuration of the automatic analysis apparatus of Fig. 2;
Fig. 3 is a block diagram illustrating a configuration of a feature portion of the automatic analysis apparatus of Fig. 1;
Fig. 4 is a flowchart illustrating an operation for sharing a reagent on a side of a first automatic analysis apparatus where a reagent vessel in use is taken out; and
Fig. 5 is a flowchart illustrating an operation for sharing a reagent on a side of a second automatic analysis apparatus where a reagent vessel in use is taken in.

### MODE(S) FOR CARRYING OUT THE INVENTION

Hereinafter, an embodiment of the invention will be described with reference to the drawings.

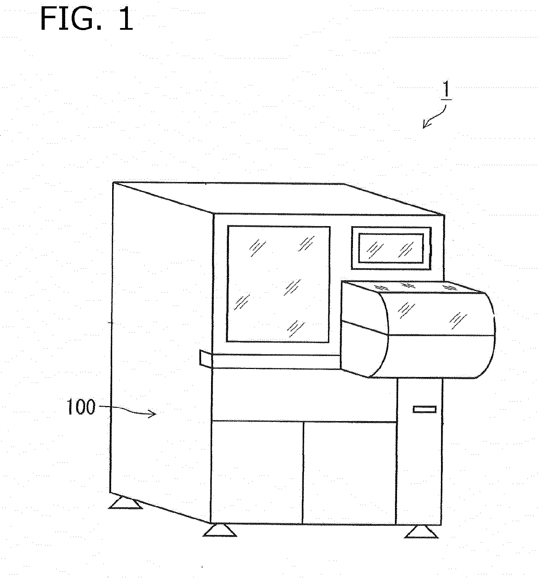

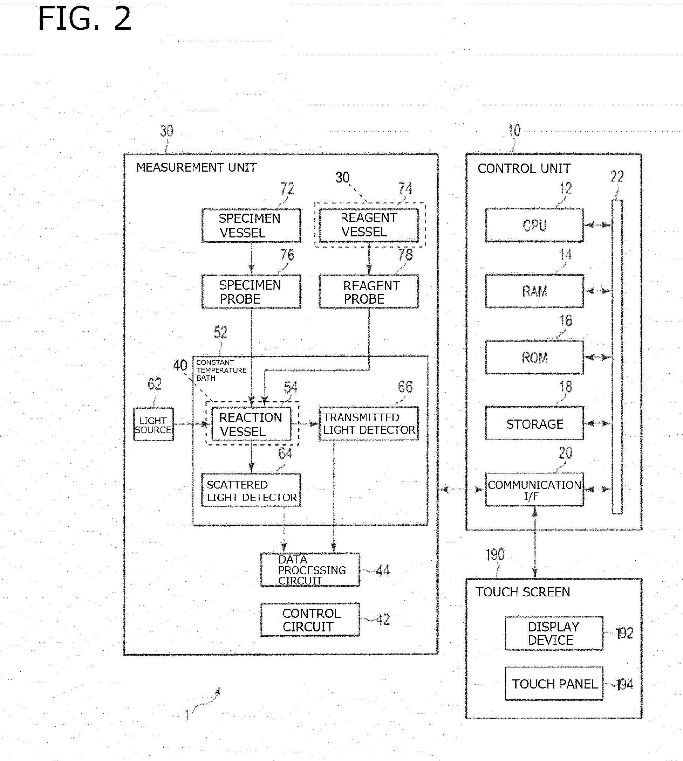

Fig. 1 is a schematic overall external view of an automatic analysis apparatus of the present embodiment, and Fig. 2 is a block diagram illustrating a schematic configuration of the automatic analysis apparatus of Fig. 1. As illustrated in Fig. 2, the automatic analysis apparatus 1 of the present embodiment includes a reaction portion 40 for holding a reaction vessel 54 into which a specimen is dispensed, and a reagent supply portion 30 for supplying a reagent to the reaction vessel 54, and obtains measurement information on a predetermined test item by causing a reaction between a specimen and a reagent supplied from the reagent supply portion 30 to the reaction vessel 54 to measure a reaction process.

Specifically, an outer frame of the automatic analysis apparatus 1 of the present embodiment is formed by a housing 100, and the automatic analysis apparatus 1 is configured by forming a specimen processing space in an upper part of the housing 100.

As clearly illustrated in Fig. 2, the automatic analysis apparatus 1 includes a control unit 10, a measurement unit 30, and a touch screen 190.

The control unit 10 controls the overall operation of the automatic analysis apparatus 1. The control unit 10 includes, for example, a personal computer (PC). The control unit 10 includes a Central Processing Unit (CPU) 12, a Random Access Memory (RAM) 14, a Read Only Memory (ROM) 16, a storage 18, and a communication interface (I/F) 20 connected to each other via a bus line 22. The CPU 12 performs various signal processing, etc. The RAM 14 functions as a main storage device of the CPU 12. As the RAM 14, for example, a Dynamic RAM (DRAM), a Static RAM (SRAM), etc. can be used. The ROM 16 records various boot programs, etc. For the storage 18, for example, a Hard Disk Drive (HDD), a Solid State Drive (SSD), etc. can be used. Various types of information such as programs and parameters used by the CPU 12 are recorded in the storage 18. Further, data acquired by the measurement unit 30 is recorded in the storage 18. The RAM 14 and the storage 18 are not limited thereto, and can be replaced with various storage devices. The control unit 10 communicates with an external device, for example, the measurement unit 30 and the touch screen 190 via the communication I/F 20.

The touch screen 190 includes a display device 192 and a touch panel 194. The display device 192 may include, for example, a liquid crystal display (LCD), an organic EL display, etc. The display device 192 displays various screens under the control of the control unit 10. This screen may include various screens such as an operation screen of the automatic analysis apparatus 1, a screen showing a measurement result, and a screen showing an analysis result. The touch panel 194 is provided on the display device 192. The touch panel 194 acquires an input from a user and transmits the obtained input information to the control unit 10.

The control unit 10 may be connected to other devices such as a printer, a handy code reader, and a host computer via the communication I/F 20.

The measurement unit 30 includes a control circuit 42, a data processing circuit 44, a constant temperature bath 52, the reaction vessel 54, a light source 62, a scattered light detector 64, a transmitted light detector 66, a specimen vessel 72, a reagent vessel 74, a specimen probe 76, and a reagent probe 78. In this case, the reaction vessel 54, the scattered light detector 64, and the transmitted light detector 66 are provided in the constant temperature bath 52.

The control circuit 42 controls an operation of each part of the measurement unit 30 based on a command from the control unit 10. Although not illustrated, the control circuit 42 is connected to the data processing circuit 44, the constant temperature bath 52, the light source 62, the scattered light detector 64, the transmitted light detector 66, the specimen probe 76, the reagent probe 78, etc., and controls an operation of each part.

The data processing circuit 44 is connected to the scattered light detector 64 and the transmitted light detector 66, and acquires a detection result from the scattered light detector 64 and the transmitted light detector 66. The data processing circuit 44 performs various processes on the acquired detection result and outputs a processing result. The processes performed by the data processing circuit 44 may include, for example, an A/D conversion process for converting a format of data output from the scattered light detector 64 and the transmitted light detector 66 into a format that can be processed by the control unit 10.

The control circuit 42 and the data processing circuit 44 may include, for example, a CPU, an Application Specific Integrated Circuit (ASIC), a Field Programmable Gate Array (FPGA), etc. Each of the control circuit 42 and the data processing circuit 44 may be configured by one integrated circuit, etc., or may be configured by combining a plurality of integrated circuits, etc. Further, the control circuit 42 and the data processing circuit 44 may include one integrated circuit, etc. The operation of the control circuit 42 and the data processing circuit 44 may be performed according to, for example, a program recorded in a storage device or a recording area in the circuit.

The specimen vessel 72 contains, for example, a specimen obtained from blood collected from a patient. The reagent vessel 74 contains various reagents used for measurement. Any number of specimen vessels 72 and reagent vessels 74 may be provided. Since there is usually a plurality of types of reagents used for analysis, there is generally a plurality of reagent vessels 74. The specimen probe 76 dispenses the specimen contained in the specimen vessel 72 into the reaction vessel 54 under the control of the control circuit 42. The reagent probe 78 dispenses the reagent contained in the reagent vessel 74 into the reaction vessel 54 under the control of the control circuit 42. Any number of specimen probes 76 and reagent probes 78 may be used.

The constant temperature bath 52 maintains the temperature of the reaction vessel 54 at a predetermined temperature under the control of the control circuit 42. In the reaction vessel 54, a mixed solution obtained by mixing the specimen dispensed by the specimen probe 76 and the reagent dispensed by the reagent probe 78 reacts. Note that any number of reaction vessels 54 may be used.

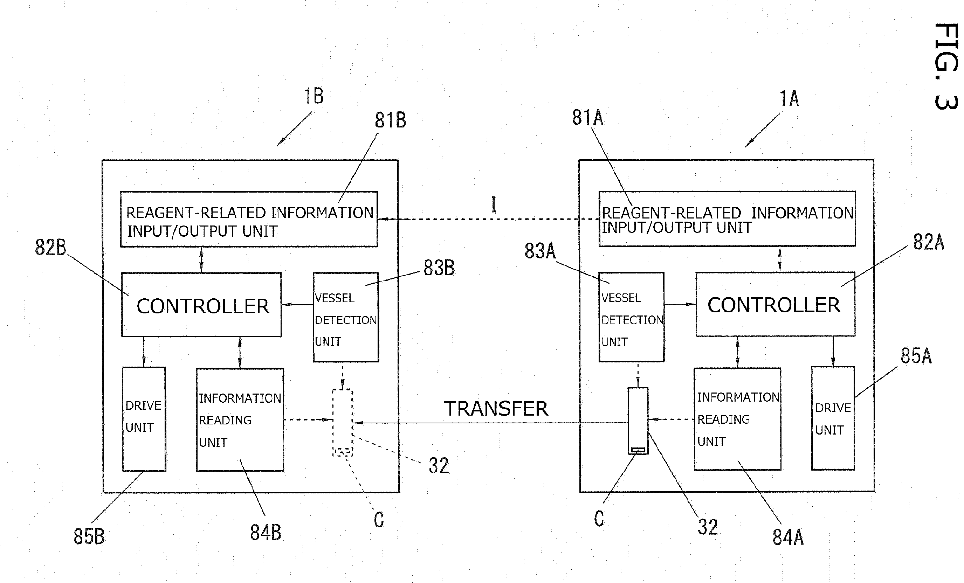

The light source 62 emits light having a predetermined wavelength under the control of the control circuit 42. The light source 62 may be configured to emit light having a different wavelength depending on the measurement condition. Therefore, the light source 62 may have a plurality of light source elements. The light emitted from the light source 62 is guided by, for example, an optical fiber, and is applied to the reaction vessel 54. The light applied to the reaction vessel 54 is partially scattered and partially transmitted depending on the reaction process state of the mixed solution in the reaction vessel 54. The scattered light detector 64 detects the light scattered in the reaction vessel 54, and detects, for example, the amount of the scattered light. The transmitted light detector 66 detects the light transmitted through the reaction vessel 54, and detects, for example, the amount of transmitted light. The data processing circuit 44 processes information on the amount of scattered light detected by the scattered light detector 64, and processes information on the amount of transmitted light detected by the transmitted light detector 66. Any one of the scattered light detector 64 and the transmitted light detector 66 may operate depending on the measurement condition. Therefore, the data processing circuit 44 may process any one of the information on the amount of scattered light detected by the scattered light detector 64 or the information on the amount of transmitted light detected by the transmitted light detector 66 according to the measurement condition. The data processing circuit 44 transmits processed data to the control unit 10. Note that even though the measurement unit 30 illustrated in Fig. 3 includes two light detectors, the scattered light detector 64 and the transmitted light detector 66, the measurement unit 30 may include any one of the light detectors.

The control unit 10 performs various calculations based on the data acquired from the measurement unit 30. These calculations include calculation of the reaction amount of the mixed solution, quantitative calculation of the substance amount or an activity value of a substance to be measured in a subject based on the reaction amount, etc. The data processing circuit 44 may perform some or all of these calculations.

Note that here, even though the case where a PC that controls the operation of the measurement unit 30 and a PC that performs data calculation and quantitative calculation are the same control unit 10 is illustrated, the PCs may be separate bodies. In other words, the PC that performs the data calculation and the quantitative calculation may exist as each.

Next, a description will be given of a characteristic functional part of the automatic analysis apparatus for enabling the reagent to be shared between the two automatic analysis apparatuses having the above configuration and a reagent management method with reference to Figs. 3 to 5.

In Fig. 3, two automatic analysis apparatuses 1A and 1B having the configuration of Fig. 1 and Fig. 2 described above are schematically illustrated as a block diagram by clearly illustrating only a functional part for sharing a reagent. Here, a description will be given of the case where one reagent vessel 32 is shared between the two automatic analysis apparatuses 1A and 1B.

As illustrated in the figure, each automatic analysis apparatus 1A (1B) includes a controller 82A (82B) that controls an operation of each of units (in Fig. 3, these respective units are collectively referred to as a drive unit 85A (85B)) of the automatic analysis apparatus 1, a reagent-related information input/output unit 81A (81B) for inputting and outputting reagent-related information (information held by a side of the automatic analysis apparatus 1A (1B)) I related to a reagent installed in the reagent supply portion 30 including a reagent in use, a reagent vessel detection unit 83A (83B) for detecting that the reagent vessel 32 containing the reagent in use is taken in and/or taken out of the automatic analysis apparatus 1A (1B), and a reagent-related information reading unit 84A (84B) that reads reagent-related information C (information held by a side of the reagent and/or the reagent vessel 32) from the reagent and/or the reagent vessel 32 in use detected to be taken in the automatic analysis apparatus 1A (1B) by the reagent vessel detection unit 83A (83B). In this case, for example, the reagent vessel detection unit 83A (83B) and the reagent-related information reading unit 84A (84B) are provided at predetermined positions along a rotation direction of a rotary table 34 of the reagent supply portion 30. In addition, for example, when the reagent-related information C exists as a barcode displayed on or affixed to the reagent vessel 32, the reagent-related information reading unit 84A (84B) may be configured as a barcode reader.

Here, the reagent-related information I (C) related to the reagent may be identification information for identifying the reagent and/or the reagent vessel 32 (information related to a test item, a serial number, an expiration date, etc.) or usage information related to the use of the reagent (usage status information). In addition, examples of the usage information may include a liquid level height, the number of times of use (number of measurements), the remaining amount, etc. of the reagent. In addition, when the usage information includes information such as the liquid level height of the reagent that requires confirmation of some detection, measurement, etc. on an apparatus side that receives the reagent vessel in use, reading of the reagent-related information C by the reagent-related information reading unit 84A (84B) includes predetermined detection information related to the reagent, for example, the liquid level height, etc. For example, the apparatus receiving the transferred reagent vessel in use uses a reagent suction probe to detect the liquid level of the reagent, and calculates the remaining amount of the reagent in the reagent vessel from the detected liquid level height. Since an origin height of the reagent suction probe with respect to a base surface differs slightly depending on the apparatus, when the liquid level is detected, the remaining pulse amount to the base surface may differ even when the same pulse amount drops, and there is an error in calculation of the remaining amount of the reagent in the reagent vessel. Therefore, it is preferable that the apparatus side has a function capable of correcting the amount.

Next, a description will be given of, for example, a method of enabling the reagent vessel 32 used in the first automatic analysis apparatus 1A to be transferred to the second automatic analysis apparatus 1B and continuously used in the second automatic analysis apparatus by such a configuration (functional part) with reference to Figs. 3 to 5. Note that the reagent vessel 32 is transferred from the first automatic analysis apparatus 1A to the second automatic analysis apparatus 1B here. However, even when a transfer direction is opposite, that is, when the reagent vessel 32 is transferred from the second automatic analysis apparatus 1B to the first automatic analysis apparatus 1A, a flow of the method (operation) is similar.

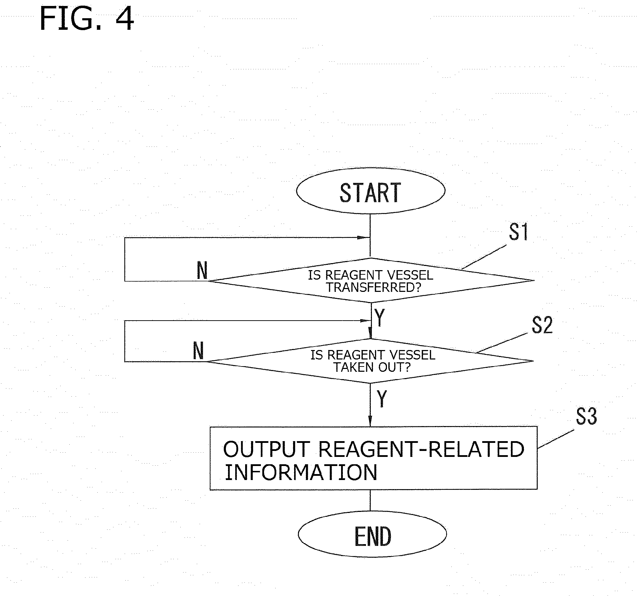

First, when it is desired to transfer the reagent used in the first automatic analysis apparatus 1A to the second automatic analysis apparatus 1B and use the reagent (step S1 of Fig. 4), the reagent vessel 32 containing the reagent in use is taken out of the first automatic analysis apparatus 1A (also see Fig. 3). As the reagent vessel 32 is taken out, that is, when the reagent vessel detection unit 83A detects that the reagent vessel 32 is taken out (step S2 of Fig. 4), the reagent-related information I related to the reagent in use used in the first automatic analysis apparatus 1A is output from the reagent-related information input/output unit 81A of the first automatic analysis apparatus 1A (reagent-related information output step S3 of Fig. 4) . However, a timing of outputting the reagent-related information I is not limited thereto. For example, when a power supply of the first automatic analysis apparatus 1A is shut down, the reagent-related information input/output unit 81A may automatically output the reagent-related information I to, for example, a storage medium connected to the apparatus 1A, which prevents an operator from forgetting. Note that when the storage medium is not set in the apparatus 1A before the power supply is shut down, the operator may be notified of this fact. Alternatively, as the timing of outputting the reagent-related information I, after opening a lid of a reagent cold storage of the reagent supply portion 30 and taking out the reagent vessel 32 from the reagent cold storage, the reagent-related information input/output unit 81A may output the reagent-related information I to, for example, the storage medium connected to the apparatus 1A using, as a trigger, the fact that information of the reagent vessel 32 cannot be read again on the reagent supply portion 30 side at a position on the rotary table 34 of the reagent vessel 32 taken out. In addition, this message may be output to a monitor of a display input unit 60 to alert the operator. Alternatively, each time an analysis batch is completed or when all tests set for a set specimen is completed, the reagent-related information I of the reagent vessel 32 may be automatically output (written) from the reagent-related information input/output unit 81A to the storage medium, etc. The reagent-related information input/output unit 81A may automatically output the reagent-related information I according to an operating state of the automatic analysis apparatus 1A and/or the reagent supply portion 30 in this way, and may output the reagent-related information I based on a manually input signal. For example, the operator may freely output the reagent-related information I to the storage medium, etc. via the reagent-related information input/output unit 81A at any time by manual operation.

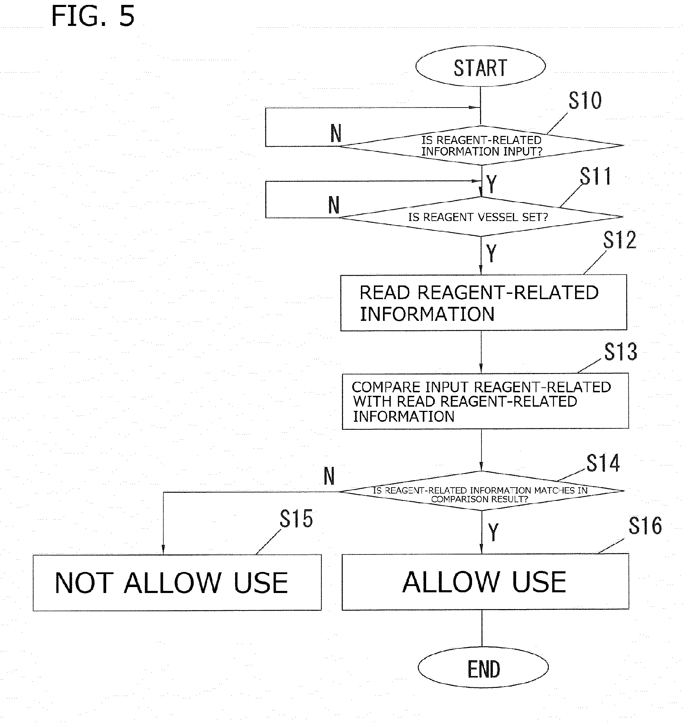

When the reagent-related information I is output from the reagent-related information input/output unit 81A of the first automatic analysis apparatus 1A in this way, the reagent-related information I is input to the reagent-related information input/output unit 81B of the second automatic analysis apparatus 1B via the above-described storage medium (for example, USB memory, SD card, etc.) or by remote communication (for example, mail delivery via an external server, Bluetooth (registered trademark), etc.). In addition, the reagent vessel 32 taken out of the first automatic analysis apparatus 1A is then set in the reagent supply portion 30 of the second automatic analysis apparatus 1B. Therefore, on the second automatic analysis apparatus 1B side, when the input of the reagent-related information I is confirmed by the reagent-related information input/output unit 81B (reagent-related information input step S10 of Fig. 5), the reagent vessel detection unit 83B detects that the reagent vessel 32 is taken in (reagent vessel detection step S11).

When the reagent-related information I is input to the reagent-related information input/output unit 81B and the reagent vessel detection unit 83B detects that the reagent vessel 32 is taken in, the reagent-related information reading unit 84B of the second automatic analysis apparatus 1B reads, from the reagent vessel 32 (and/or reagent) taken in, the reagent-related information C held by the reagent vessel 32 (and/or reagent) (reagent-related information reading step S12). Then, thereafter, the controller 82B compares the reagent-related information C read by the reagent-related information reading unit 84B with the reagent-related information I input to the reagent-related information input/output unit 81B (step S13), and controls an operation of the reagent supply portion 30 based on a comparison result thereof (control steps S14, S15, and S16). In particular, in this example, when the reagent-related information C matches the reagent-related information I in the comparison result, the controller 82B controls the operation of the reagent supply portion to determine that the reagent vessel 32 detected by the reagent vessel detection unit 83B is the reagent vessel 32 used in the first automatic analysis apparatus 1B and allow continuous use of the reagent vessel 32 (step S16). When the reagent-related information C does not match the reagent-related information I in the comparison result, the controller 82B does not allow continuous use of the reagent vessel 32 (step S15). Note that in the case where information about the expiration date is included in the reagent-related information I and C, when the expiration date of the reagent vessel 32 read on the second automatic analysis apparatus 1B side previously passes, the operator may be promoted to take out the reagent. Alternatively, it is preferable not to allow use of the reagent vessel 32 even when the reagent-related information C matches the reagent-related information I in the comparison result. Alternatively, the operator may be able to select one of these.

As described above, according to the present embodiment, the second automatic analysis apparatus 1B can acquire the reagent-related information I and C related to the reagent started to be used in the first automatic analysis apparatus 1A in two steps from the first automatic analysis apparatus 1A side and from reading by the apparatus on the second automatic analysis apparatus 1B side, compares the reagent-related information I and C acquired in each of the steps, and controls the operation of the reagent supply portion 30 based on the comparison result thereof (the operation of the reagent supply portion 30 is controlled so that continuous use of the reagent is allowed when the reagent-related information C read by the reagent-related information reading unit 84B matches the reagent-related information I input to the reagent-related information input/output unit 81B). Thus, it is possible to share the reagent between the first automatic analysis apparatus 1A and the second automatic analysis apparatus 1B without any problem (the reagent used in the first automatic analysis apparatus 1A can be continuously used in the second automatic analysis apparatus 1B without any problem, or vice versa). For this reason, even when there is no function of allowing reagent information to be exchanged among a plurality of apparatuses by centralized management as in a large-scale testing center, the reagent can be shaped between the two independent apparatuses 1A and 1B. As a result, when at least two of the same apparatuses 1A and 1B are used properly, it is unnecessary to set the reagents of the same test item in the respective apparatuses 1A and 1B, and the waste of the reagents due to limitation of an onboard time can be reduced. In addition, usability of a POCT apparatus, which is likely to share one reagent bottle among a plurality of apparatuses, is improved. This is particularly useful in a reagent serial management method in which usage states of reagent vessels are managed for each reagent vessel by using serial numbers for distinguishing reagents in the same lot.

Note that the invention is not limited to the above-described embodiment, and can be variously modified and implemented without departing from the gist thereof. For example, in the invention, a configuration form of identification-related information, a configuration form of the automatic analysis apparatus, etc. can be arbitrarily set. In addition, some or all of the above-described embodiments may be combined, or a part of a configuration may be omitted from one of the above-described embodiments.

### EXPLANATIONS OF LETTERS OR NUMERALS

1, 1A, 1B AUTOMATIC ANALYSIS APPARATUS
30 REAGENT SUPPLY PORTION
32 REAGENT VESSEL
40 REACTION PORTION
81A, 81B REAGENT-RELATED INFORMATION INPUT/OUTPUT UNIT
82A, 82B CONTROLLER
83A, 83B REAGENT VESSEL DETECTION UNIT
84A, 84B REAGENT-RELATED INFORMATION READING UNIT
C, I REAGENT-RELATED INFORMATION

## Claims

1. An automatic analysis apparatus comprising:
a reaction portion for holding a reaction vessel, a specimen being dispensed into the reaction vessel; and
a reagent supply portion for supplying a reagent,
the automatic analysis apparatus obtaining measurement information related to a predetermined test item by causing a reaction between a specimen and a reagent supplied from the reagent supply portion to measure a reaction process thereof,
the automatic analysis apparatus further comprising:
a controller for controlling an operation of each unit of the apparatus;
a reagent-related information input/output unit for inputting and outputting reagent-related information related to the reagent installed in the reagent supply portion including a reagent in use;
a reagent vessel detection unit for detecting that a reagent vessel containing the reagent in use is taken in and/or taken out of the automatic analysis apparatus; and
a reagent-related information reading unit for reading the reagent-related information from the reagent and/or reagent vessel in use detected to be taken in the automatic analysis apparatus by the reagent vessel detection unit,
wherein the controller compares the reagent-related information read by the reagent-related information reading unit with the reagent-related information input to the reagent-related information input/output unit, and controls an operation of the reagent supply portion based on a comparison result thereof.

2. The automatic analysis apparatus according to claim 1, wherein the controller controls an operation of the reagent supply portion to allow continuous use of the reagent when the reagent-related information matches in the comparison result for the reagent in use.

3. The automatic analysis apparatus according to claim 1 or 2, wherein the reagent-related information input/output unit inputs and outputs the reagent-related information using a storage medium.

4. The automatic analysis apparatus according to claim 1 or 2, wherein the reagent-related information input/output unit inputs and outputs the reagent-related information by remote communication.

5. The automatic analysis apparatus according to any one of claims 1 to 4, wherein the reagent-related information input/output unit automatically outputs the reagent-related information based on a manually input signal or according to an operating state of the automatic analysis apparatus and/or the reagent supply portion.

6. The automatic analysis apparatus according to any one of claims 1 to 5, wherein the reagent-related information is identification information for identifying the reagent and/or the reagent vessel.

7. The automatic analysis apparatus according to any one of claims 1 to 6, wherein the reagent-related information includes usage status information related to use of the reagent.

8. The automatic analysis apparatus according to claim 7, wherein the usage information includes a liquid level height of a reagent or the number of measurements.

9. The automatic analysis apparatus according to claim 7 or 8, wherein the reading of the reagent-related information by the reagent-related information reading unit includes predetermined detection information related to a reagent.

10. A method for sharing a reagent between automatic analysis apparatuses, each of the automatic analysis apparatuses including a reaction portion for holding a reaction vessel, a specimen being dispensed into the reaction vessel, and a reagent supply portion for supplying a reagent, the automatic analysis apparatus obtaining measurement information related to a predetermined test item by causing a reaction between a specimen and a reagent supplied from the reagent supply portion to measure a reaction process thereof, the method comprising:
a reagent-related information output step of outputting, from a first automatic analysis apparatus, reagent-related information related to a reagent in use used in the apparatus at a predetermined timing;
a reagent-related information input step of inputting the reagent-related information output from the first automatic analysis apparatus to a second automatic analysis apparatus;
a reagent vessel detection step of detecting that a reagent vessel containing the reagent in use is taken in the second automatic analysis apparatus;
a reagent-related information reading step of reading the reagent-related information from the reagent and/or reagent vessel in use detected to be taken in the second automatic analysis apparatus by the reagent vessel detection step; and
a control step of comparing the reagent-related information read in the reagent-related information reading step with the reagent-related information input in the reagent-related information input step, and controlling an operation of the reagent supply portion of the second automatic analysis apparatus based on a comparison result thereof.

11. The method according to claim 10, wherein the control step includes controlling an operation of the reagent supply portion so that when the reagent-related information matches in the comparison result, it is determined that a reagent vessel detected in the reagent vessel detection step is a reagent vessel used in the first automatic analysis apparatus to allow continuous use of the reagent vessel in the second automatic analysis apparatus.

12. The method according to claim 10 or 11, wherein in the reagent-related information output step and the reagent-related information input step, the reagent-related information is input and output through a storage medium.

13. The method according to claim 10 or 11, wherein in the reagent-related information output step and the reagent-related information input step, the reagent-related information is input and output by remote communication.

14. The method according to any one of claims 10 to 13, wherein in the reagent-related information output step, the reagent-related information is automatically output based on a manually input signal or according to an operating state of the automatic analysis apparatus and/or the reagent supply portion.

15. The method according to any one of claims 10 to 14, wherein the reagent-related information is identification information for identifying the reagent and/or the reagent vessel.

16. The method according to any one of claims 10 to 15, wherein the reagent-related information includes usage status information related to use of the reagent.

17. The method according to claim 16, wherein the usage information includes a liquid level height of a reagent or the number of measurements.

18. The method according to claim 16 or 17, wherein the reading of the reagent-related information in the reagent information reading step includes predetermined detection information related to a reagent.

## Amended claims

### Amended claims under Art. 19.1 PCT

1. [Amended] An automatic analysis apparatus comprising:
a reaction portion for holding a reaction vessel, a specimen being dispensed into the reaction vessel; and
a reagent supply portion for supplying a reagent,
the automatic analysis apparatus obtaining measurement information related to a predetermined test item by causing a reaction between a specimen and a reagent supplied from the reagent supply portion to measure a reaction process thereof,
the automatic analysis apparatus further comprising:
a controller for controlling an operation of each unit of the apparatus;
a reagent-related information input/output unit for inputting and outputting reagent-related information related to the reagent installed in the reagent supply portion including a reagent in use;
a reagent vessel detection unit for detecting that a reagent vessel containing the reagent in use is taken in and/or taken out of the automatic analysis apparatus; and
a reagent-related information reading unit for reading the reagent-related information from the reagent and/or reagent vessel in use detected to be taken in the automatic analysis apparatus by the reagent vessel detection unit,
wherein the controller compares the reagent-related information read by the reagent-related information reading unit with the reagent-related information input to the reagent-related information input/output unit, controls an operation of the reagent supply portion based on a comparison result thereof, and allows continuous use of the reagent when the reagent-related information matches in the comparison result for the reagent in use.

2. [Deleted]

3. [Amended] The automatic analysis apparatus according to claim 1, wherein the reagent-related information input/output unit inputs and outputs the reagent-related information using a storage medium.

4. [Amended] The automatic analysis apparatus according to claim 1, wherein the reagent-related information input/output unit inputs and outputs the reagent-related information by remote communication.

5. The automatic analysis apparatus according to any one of claims 1 to 4, wherein the reagent-related information input/output unit automatically outputs the reagent-related information based on a manually input signal or according to an operating state of the automatic analysis apparatus and/or the reagent supply portion.

6. The automatic analysis apparatus according to any one of claims 1 to 5, wherein the reagent-related information is identification information for identifying the reagent and/or the reagent vessel.

7. The automatic analysis apparatus according to any one of claims 1 to 6, wherein the reagent-related information includes usage status information related to use of the reagent.

8. [Amended] The automatic analysis apparatus according to claim 7, wherein the usage status information includes a liquid level height of a reagent or the number of measurements.

9. The automatic analysis apparatus according to claim 7 or 8, wherein the reading of the reagent-related information by the reagent-related information reading unit includes predetermined detection information related to a reagent.

10. [Amended] A reagent management method for sharing a reagent between automatic analysis apparatuses, each of the automatic analysis apparatuses including a reaction portion for holding a reaction vessel, a specimen being dispensed into the reaction vessel, and a reagent supply portion for supplying a reagent, the automatic analysis apparatus obtaining measurement information related to a predetermined test item by causing a reaction between a specimen and a reagent supplied from the reagent supply portion to measure a reaction process thereof, the method comprising:
a reagent-related information output step of outputting, from a first automatic analysis apparatus, reagent-related information related to a reagent in use used in the apparatus at a predetermined timing;
a reagent-related information input step of inputting the reagent-related information output from the first automatic analysis apparatus to a second automatic analysis apparatus;
a reagent vessel detection step of detecting that a reagent vessel containing the reagent in use is taken in the second automatic analysis apparatus;
a reagent-related information reading step of reading the reagent-related information from the reagent and/or reagent vessel in use detected to be taken in the second automatic analysis apparatus by the reagent vessel detection step; and
a control step of comparing the reagent-related information read in the reagent-related information reading step with the reagent-related information input in the reagent-related information input step, and controlling an operation of the reagent supply portion of the second automatic analysis apparatus based on a comparison result thereof.

11. [Amended] The reagent management method according to claim 10, wherein the control step includes controlling an operation of the reagent supply portion so that when the reagent-related information matches in the comparison result, it is determined that a reagent vessel detected in the reagent vessel detection step is a reagent vessel used in the first automatic analysis apparatus to allow continuous use of the reagent vessel in the second automatic analysis apparatus.

12. [Amended] The reagent management method according to claim 10 or 11, wherein in the reagent-related information output step and the reagent-related information input step, the reagent-related information is input and output through a storage medium.

13. [Amended] The reagent management method according to claim 10 or 11, wherein in the reagent-related information output step and the reagent-related information input step, the reagent-related information is input and output by remote communication.

14. [Amended] The reagent management method according to any one of claims 10 to 13, wherein in the reagent-related information output step, the reagent-related information is automatically output based on a manually input signal or according to an operating state of the automatic analysis apparatus and/or the reagent supply portion.

15. [Amended] The reagent management method according to any one of claims 10 to 14, wherein the reagent-related information is identification information for identifying the reagent and/or the reagent vessel.

16. [Amended] The reagent management method according to any one of claims 10 to 15, wherein the reagent-related information includes usage status information related to use of the reagent.

17. [Amended] The reagent management method according to claim 16, wherein the usage status information includes a liquid level height of a reagent or the number of measurements.

18. [Amended] The reagent management method according to claim 16 or 17, wherein the reading of the reagent-related information in the reagent information reading step includes predetermined detection information related to a reagent.

Statement under Art. 19.1 PCT
1. Claims 1 was limited to clarify differences from the references. The recitations of "... allows continuous use of the reagent when the reagent-related information matches in the comparison result for the reagent in use" is based on Claim 2.

2. Along with the above amendment in Claim 1, Claim 2 was deleted.

3. The amendment in each claim after Claim 1 is that the claim number of the cited claims is amended along with the deletion of Claim 2.

4. The amendments in Claims 8 and 17 are corrections of a clerical error, and the recitation of "the usage information" was corrected to "the usage status information."

5. The amendments in Claims 10 to 18 are those the recitation of "method" was corrected to "reagent management method" based on the description of the paragraph [0026].
